# EUROPEAN PATENT SPECIFICATION

(11) **EP 3 776 200 B1**
(45) Date of publication and mention of the grant of the patent: **04.11.2026**
(21) Application number: 18855141.0
(22) Date of filing: 06.09.2018
(51) Int. Cl.: G09G 5/36, G06F 9/50

(54) **RENDERING METHOD, COMPUTER PRODUCT AND DISPLAY APPARATUS**
DARSTELLUNGSVERFAHREN, COMPUTERPRODUKT UND ANZEIGEVORRICHTUNG
PROCÉDÉ DE RENDU, PRODUIT INFORMATIQUE ET APPAREIL D'AFFICHAGE

(30) Priority: 27.03.2018 CN 201810260593
(43) Date of publication of application: 17.02.2021
(73) Proprietor: BOE TECHNOLOGY GROUP CO., LTD., Beijing 100015 (CN); Beijing BOE Optoelectronics Technology Co., Ltd., Beijing 100176 (CN)
(72) Inventor: WANG, Xuefeng, Beijing 100176 (CN); SUN, Yukun, Beijing 100176 (CN); ZHAO, Bin, Beijing 100176 (CN); WANG, Lixin, Beijing 100176 (CN); LI, Xi, Beijing 100176 (CN); SUO, Jianwen, Beijing 100176 (CN); LI, Wenyu, Beijing 100176 (CN); FAN, Qingwen, Beijing 100176 (CN); PENG, Jinbao, Beijing 100176 (CN); LU, Yuanjie, Beijing 100176 (CN); LIU, Yali, Beijing 100176 (CN); WANG, Chenru, Beijing 100176 (CN); SUN, Jiankang, Beijing 100176 (CN); ZHANG, Hao, Beijing 100176 (CN); CHEN, Lili, Beijing 100176 (CN); MIAO, Jinghua, Beijing 100176 (CN)
(74) Representative: Isarpatent
(86) International application number: PCT/CN2018/104350
(87) International publication number: WO 2019/184251

(56) References cited:
- EP-A1- 3 293 723
- WO-A1-2018/040428
- CN-A- 103 905 688
- CN-A- 105 096 905
- CN-A- 105 659 584
- CN-A- 107 516 335
- US-A1- 2011 102 425
- US-A1- 2017 169 602
- US-A1- 2018 047 129
- US-A1- 2018 061 084
- US-A1- 2020 183 166

## Description

### TECHNICAL FIELD

The present disclosure relates to display technologies, in particular, to an image rendering method, a renderer, a computer product, and a display apparatus.

### BACKGROUND

Products of virtual reality (VR), augmented reality (AR), and mixed reality (MR) require the use of a renderer to render an image. Rendering is the process of outputting a two-dimensional image from computing a data model of a virtual three-dimensional scene according to one or more perspective field of views.

As VR/AR/MR technology becomes more and more demanding on display screen resolution, the amount of data information required by the rendering software is also increasing. A high resolution rendering scene requires a faster computation speed of rendering software, a higher consumption of the processor, and a larger volume of data to be transmitted. CN107516335A discloses a graphic rendering method and device for virtual reality. US2017/169602A1 discloses foveated rendering for rendering an image. US2018/061084A1 discloses a system configured for bandwidth-sensitive rendering of a focal area of an animation presented on a display.

### BRIEF SUMMARY

The invention is set out in the appended set of claims.

### BRIEF DESCRIPTION OF THE DRAWINGS

**In** order to more clearly illustrate the embodiments of the present disclosure or the technical solutions in the prior art, the drawings used in the embodiments or the description of the prior art will be briefly described below. Obviously, the drawings in the following description are only certain embodiments of the present disclosure, and other drawings can be obtained from those skilled in the art without any creative work.
FIG. 1 is a flow chart of a rendering method according to one embodiment of the present disclosure;
FIG. 2 is a flow chart of a rendering method according to one embodiment of the present disclosure;
FIGS. 3 - 6 are pictures of different steps illustrating a rendering method according to one embodiment of the present disclosure;
FIG. 7 is a partial enlarged view of FIG. 6 according to one embodiment of the present disclosure;
FIG. 8 is a schematic structural diagram of a computer product according to one embodiment of the present disclosure.

### DETAILED DESCRIPTION

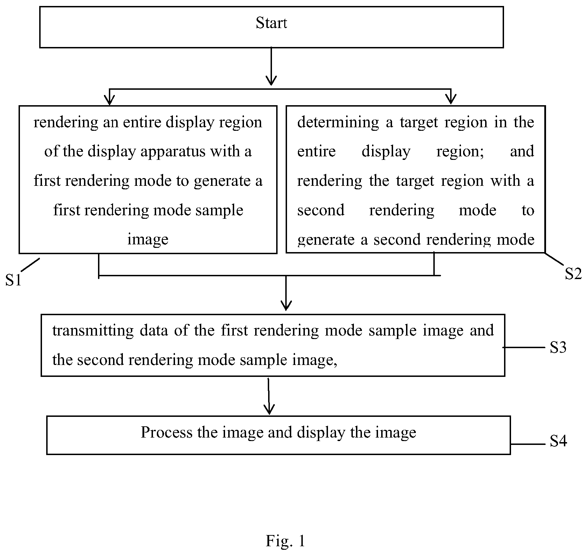

The present disclosure will be described in further detail with reference to the accompanying drawings and embodiments in order to provide a better understanding by those skilled in the art of the technical solutions of the present disclosure. Throughout the description of the disclosure, reference is made to Figs. 1-8. When referring to the figures, like structures and elements shown throughout are indicated with like reference numerals.

The renderer is a core component of some editable computer game systems or interactive real-time image applications, including a 2D image renderer and a 3D image renderer. These systems provide game designers with a variety of tools for writing games, so that game designers can easily and quickly make game programs without starting from scratch.

The renderer pipeline includes parallel processing units that process graphics signals independently of one another in the display chip (GPU). Each stage of the renderer pipeline receives input from the previous stage thereof and outputs to the next stage after the processing is completed. The whole process is to complete one frame rendering. In the early days of the GPU, the processing power thereof was very limited. The rendering pipeline relied heavily on the CPU. The task of the entire pipeline was done by the CPU and GPU. Of course, as the GPU becomes more powerful, the GPU takes on all the tasks in the pipeline, so the concept of rendering pipelines is now equivalent to the GPU rendering pipeline.

Rendering is a process of converting a 3D scene to a 2D image on the screen. First, a virtual scene is created using the renderer. Then, a virtual camera is created as needed, and the orthogonal projection/perspective projection is the projection parameter of this camera. When the program is running, the CPU and GPU will work together to generate the virtual scene, and then the camera will call the rendering pipeline to render according to the set parameters, and the rendered image will be stored at a certain address of the GPU.
Finally, the backend handler will take the image from this address, process it, or transfer it to the hardware (display device) via the graphics interface.

Accordingly, an image rendering method according to one embodiment of the present disclosure, as shown in FIG. 1, includes the following:

In step S1, an entire display region is rendered using a first rendering mode to generate a first rendering mode sample image.

In one embodiment, the entire display region to be rendered may be an entire target scene by a renderer who performs the rendering.

In one embodiment, the renderer may construct a scene such as spacing, lighting, and object, etc. based on data of the scene such as attributes data, uniforms data, and texture data etc..

In one embodiment, the renderer may construct the scene through a shader of a graphics processor, a central processor, or other circuits that can perform rendering operation.

In step S2, a region in the entire display region is determined as a target region, and the target region is rendered using a second rendering mode to generate a second rendering mode sample image.

Through steps S1 and S2, different scenes may be rendered by different rendering modes: rendering a partial region of the entire display region (e.g., the above-mentioned "target region") with a high image rendering feature and rendering the non-targeted region with a low image rendering feature.

The sequence of steps S1 and S2 is not limited. In fact, Step S1 can be performed before or after step S2.

In step S3: the first rendering mode sample image generated in step S1 and the second rendering mode sample image generated in step S2 are transmitted.

The second rendering mode is configured to include at least one image rendering feature that is higher than that of the first rendering mode.

In the rendering method according to the embodiment of the present disclosure, the first rendering mode renders the entire display region, and the second rendering mode renders the target region of the entire display region. Therefore, the amount of work created by the embodiments of present disclosure is much less than the amount of work created by performing the second rendering mode to the entire display region in the related art. The amount of data and transmission volume may also be reduced correspondingly. As a result, comparing to the method in the related art, the processing speed of the processor and the data transmission speed according to embodiments of the present disclosure can be significantly improved. That is, the embodiments of the present disclosure significantly improve the computer technology or functionality or capability of the computer technology. Furthermore, a user's demand of real-time screen display is more satisfied.

In comparative examples not part of the claimed invention, there may be more than one target regions. For example, a targeted region may be selected for each entire display region to be rendered.

According to the claimed invention, image rendering features include at least one of image resolution or bit depth. For a same image, the workload and the amount of data created by a low-image resolution rendering method is relative less than those by a high-image resolution rendering method, and the workload and the amount of data created by a low bit depth rendering method is relative less than those by a high bit depth rendering method.

The term of "image resolution" described in the present disclosure is conceptually corresponding to a number of pixels contained in a unit area of a display, and is being used to characterize the fineness of the display. For example, comparison of the resolutions can be converted to comparison of the pixel density per unit area, such as dots per inch (DPI) or pixels per inch (PPI) to characterize the pixel density per unit area. For convenience of description, image resolution of the first rendering mode is referred here as a first image resolution, and image resolution of the second rendering mode is referred here as a second image resolution. The image resolution may be selected based on requirement as long as the second image resolution is higher than the first image resolution.

The term of "display resolution" corresponds to a total number of pixels in a display screen. For example, the display resolution may be high-definition (HD) resolution such as full-high definition (FHD)(1080P), quad-high definition (QHD) (2K), 4K, and 5K... etc. The display resolution may be non-HD resolutions such as HD (720P), and QHD. ,

For convenience of description, bit depth of the first rendering mode may be referred to as a first bit depth, and bit depth of the second rendering mode may be referred to as a second bit depth. For example, the second bit depth may be 12 bit, 10 bit, and 8 bit... etc. The first bit depth may be 6 bit... etc. The examples listed here are only for illustration purposes, and the bit depth may be selected based on requirement as long as the second bit depth is higher than the first bit depth.

In one embodiment, as shown in FIG. 1, in step S3, the data of the first rendering mode sample image and the second rendering mode sample image are transmitted from a processor of the renderer to a display apparatus in order for a driver IC (Driver IC) of the display apparatus to receive and drive the display screen of the display apparatus to display the processed image, as shown in step S4 of FIG. 1. It should be noted that step 4 is not a step of the rendering method provided by embodiments of the present disclosure. It is merely a related process to the rendering method according to the embodiments of the present disclosure.

The rendering method in the embodiments of the present disclosure can realize real-time display of high-quality images satisfying the user's viewing requirements without reducing the output image resolution, bit depth or refreshing rate that can be apparently perceived by the user, thereby avoiding adverse effect on display quality by reducing image quality or refreshing rate.

In the embodiments of the present disclosure, the image rendering method is configured to render the target region at a high-image resolution. However, because the cone concentration of human retina for observing color is different than those for observing the details, the human eye normally can perceive only the details of a gazing area and noticeability of the area beyond 5° of the gaze area is gradually decreased. As such, the above-mentioned image rendering method does not affect the image characteristics such as definition of the image that is being observed by the human eyes. As a result, the excellent quality of the display is ensured.

At present, the related art utilizes a method lowering the refreshing rate to display real-time high quality image. However, this method can cause vertigo. On the other hand, the present disclosure does not lower the refreshing rate, thereby avoiding the problem of vertigo by a user.

In some embodiments, when the image resolution is the image rendering feature, performing the first rendering mode to the entire display region includes rendering the entire display region at the first image resolution. Performing the second rendering mode to the target region includes rendering the target region at the second image resolution. The number of pixels per unit area corresponding to the first image resolution is about 1/4 to 1/3 of the number of pixels per unit area corresponding to the second image resolution.

In some embodiments, the first image resolution is selected as long as that it is not apparent to the human eyes that the boundary of the target region and the non-target region and the region beyond the target region are blurred. For example, the first image resolution is 1/4 to 1/3 of the image resolution of the display screen displaying the image.

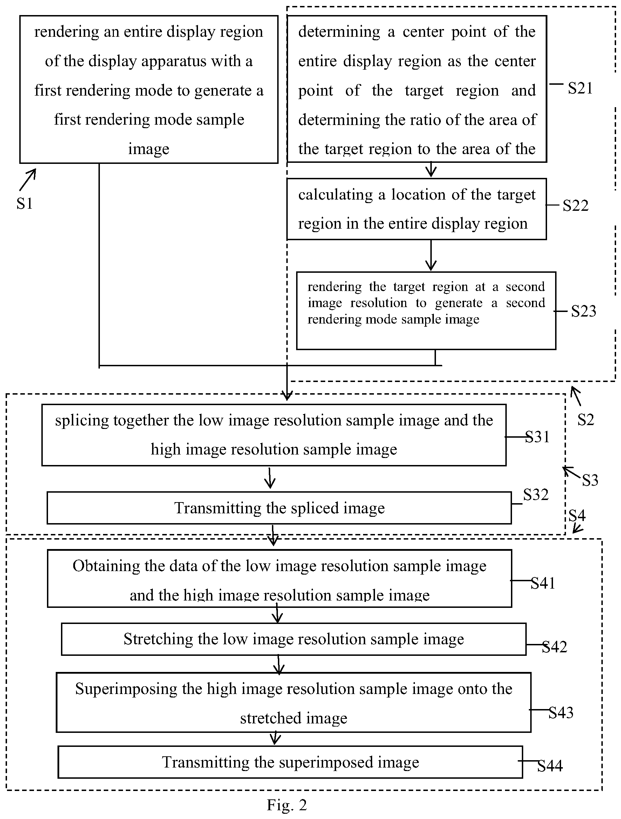

In some embodiments, as shown in FIG. 2, determining the target region of the entire display region includes the following steps:

In step S21, a center point of the target region in the entire display region is determined, and a ratio of the area of the target region to the area of the entire display region is determined.

In one embodiment, the center point of the entire display region is determined as the center point of the target region, thereby lowering the amount of computation required to determine a location of the target region. Furthermore, because normally the human eyes first focus on the center of the image when observing an image, setting the center point of an entire display region as the center point of the target region does not cause an adverse effect on the sharpness of an image that is being perceived by the human eyes.

In one embodiment, in order to improve display quality, a user's gaze point on the entire display region is set as the center point of the target region. As such, this method is more targeted when rendering high-quality images of the target region, so that the sharpness perceived by the user viewing the image remains stable.

In one embodiment, an eye-tracking system is used to track a user's gaze point on the entire display region, and based on the result of the eye-tracking system, the center point of the target region is set.

In one embodiment, in the above-mentioned step S21, the ratio of the area of the target region to the area of the entire display region is set so that it is not apparent to the user' eyes that the boundary between the target region and the non-target region and the region beyond the target region area are blurred. In one embodiment, the area of the target region is set as about 1/4 to 1/3 of the area of the entire display region.

In step S22, a location of the target region in the entire display region is calculated based on the center point of the target region and the ratio of the area of the target region to the area of the entire display region.

In some embodiments, the center point of the entire display region is selected as the center point of the target region and the ratio of the area of the target region to the area of the entire display region is set as 1:n. In the above-mentioned step S22, calculating the location of the target region in the entire display region includes the following:

A field of the view α of the camera for the entire display region is obtained;

A field of view β of the camera for the target region is calculated by inputting the parameter n and α into equation (1): $tan \left(\frac{α}{2}\right) = \frac{tan \left(\frac{β}{2}\right)}{n}$ (1)

A location of the target region in the entire display region is calculated using the obtained field of view β of the camera for the targeted region.

Here, the term "camera" is a camera of the renderer that provides viewable scenes during the rendering process such as an orthogonal projection camera or a perspective projection camera.

In some embodiments, the user's gaze point on the entire display region is set as the center point of the targeted region, 1:n is set as the ratio of the area of the target region to the area of the entire display region. In the above-mentioned step S22, calculating the location of the target region in the entire display region includes the following:

Coordinates of the user's gaze point (Zₓ, Z_{y}) are obtained, for example, through the eye-tracking system. Furthermore, near clipping distance Aₙₑₐᵣ and far clipping distance A_{far} of the camera for the entire display region, left field of view β_{left}, right field of view β_{right}, upper field of view βᵤₚ, and bottom field of view β_{down} of the camera for the target region are obtained. Based on the 1:n ratio of the area of the target region to the area of the entire display region, a range of Zₓ , -m≤Zₓ≤m, and a range of Z_{y},-m≤Z_{y}≤m are obtained.

The boundary values of the target region are obtained by substituting the obtained parameters into equation 2 below:
Near clipping distance: Zₙₑₐᵣ =Aₙₑₐᵣ
Far clipping distance: Z_{far}=A_{far}
Left boundary of near clipping plane: Z_{left}=Zₙₑₐᵣ x tanβ_{left} x 1/n x ((2 x Zₓ-m)/m)
Right boundary of near clipping plane: Z_{right}=Zₙₑₐᵣ x tanβ_{right} x 1/n x ((2 x Zₓ+m)/m)
Up boundary of near clipping plane: Zᵤₚ=Zₙₑₐᵣ x tanβᵤₚ x 1/n x ((2 x Z_{y}+m)/m)
Down boundary of near clipping plane: Z_{down}=Zₙₑₐᵣ x tanβ_{down} x 1/n x ((2 x Z_{y}-m)/m)

Parameters of projection matrix of the targeted region are obtained by substituting the obtained boundary values of the targeted region into equation 3:
$\left\{\begin{matrix}x = 2 \times {Z}_{near} / \left({Z}_{right}-{Z}_{left}\right) \\ y = 2 \times {Z}_{near} / \left({Z}_{up}-{Z}_{down}\right) \\ a = \left({Z}_{right}+{Z}_{left}\right) / \left({Z}_{right}-{Z}_{left}\right) \\ b = \left({Z}_{up}+{Z}_{down}\right) / \left({Z}_{up}-{Z}_{down}\right) \\ c = - \left({Z}_{far}+{Z}_{near}\right) / \left({Z}_{far}-{Z}_{near}\right) \\ d = - \left(2.0\times {Z}_{far}\times {Z}_{near}\right) / \left({Z}_{far}-{Z}_{near}\right) \\ e = - 1\end{matrix}\right.$ (3);

Projection matrix Zₘ of the target region is obtained by substituting the obtained parameters of the projection matrix of the targeted region into equation 4:
${Z}_{m} = \left(\begin{matrix}x & 0 & a & 0 \\ 0 & y & b & 0 \\ 0 & 0 & c & d \\ 0 & 0 & e & 0\end{matrix}\right)$ (4).

It should be noted that once the projection matrix Zₘ of the target region has been obtained, a target region may be obtained from anywhere in the entire display region that can display the full target region based on the obtained Zₘ. Therefore, the above-described method does not limit the target region to be only at the center point of the entire display region, but the target region may be at any location of the entire display region that can display the full targeted region.

In some embodiments, the size and location of the target region is adjusted by adjusting the parameters of the renderer.

For example, the asymmetry issue between the top field of view and the bottom field of view and/or the left field of view and the right field of view may be adjusted by setting a user's gaze point on a display screen of a head-mounted display apparatus as the center point of the target region in order to overcome the discomfort caused by the asymmetry of the left and right field of views and/or the upper and the lower field of views.

The method of obtaining the projection matrix to obtain the target region from any location of the entire display region which can display the full targeted region is also applicable when the center point of the entire display region is set as the center point of the target region.

After the location of the target region is set in the entire display region, high-quality rendering of the target region can start.

In some embodiments, as shown in FIG. 2, step S2 includes the following steps:

In step S23, the target region is rendered using the second rendering mode to obtain a second rendering mode sample image.

In one embodiment, in the above-mentioned step S23, when the image resolution is the image rendering feature, the DPI (pixels per inch) of the target region is selected to be the same as that of the display screen of the display apparatus to calculate the second image resolution.

In some embodiments, in the above-mentioned step S23, when bit depth is the image rendering feature, the bit depth of the target region is selected to be the same as that of the display screen of the display apparatus.

In some embodiment, as shown in FIG. 2, as a possible implementation, step S3 can includes the following steps:

In step S31, the first rendering mode sample image and the second rendering mode sample image are spliced together.

In step S32, the spliced image is transmitted.

In some embodiments, splicing the first rendering mode sample image and the second rendering mode sample image includes superimposing the second rendering mode sample image onto a corresponding region of the first rendering mode sample image.

In some embodiments, when the rendering result of the rendering method of any of the above embodiments is transmitted to the display apparatus, the entire display region to be rendered corresponds to a monocular image of the display screen of the display apparatus.

In some embodiments, an image rendering feature of the first rendering mode sample image is smaller than a display index of the corresponding image of the display screen. An image rendering feature of the second rendering mode sample image is equal to the display index of the corresponding image of the display screen.

In some embodiments, the image rendering feature includes image resolution. The number of pixels per unit area corresponding to the first image resolution of the first rendering mode is less than that corresponding to the monocular display resolution of the display screen. The number of pixels per unit area corresponding to the second image resolution of the second rendering mode is equal to that corresponding to the monocular display resolution of the display screen.

Furthermore, the image display index includes physical display parameters of the display screen such as display resolution, physical bit depth, etc.

In some embodiments, the display apparatus includes a binocular head mounted display apparatus. For a 3D virtual scene, the data being transmitted in step S3 includes a left-eye image and a right-eye image. Therefore, the spliced image includes a first image resolution rendering sample image of the left eye, a second image resolution rendering sample image of the left eye, a first image resolution rendering sample image of the right eye, and a second image resolution sample rendering image of the right eye. The four rendering images can be spliced into one image, which is then transmitted in one time.

In some embodiments, the display apparatus includes a binocular head mounted display apparatus. For a 3D virtual scene and the image rendering features include bit depth, the spliced image includes a first bit depth rendering sample image of the left eye, a second bit depth rendering sample image of the left eye, a first bit depth rendering sample image of the right eye, and a second bit depth rendering sample image of the right eye. The four rendering images can be spliced into one image, which is then transmitted in one time.

In some embodiments, after various regions have been rendered, and various images are spliced and transmitted, the display apparatus displays the received image data, that is, Step S4.

In some embodiments, step S4 as shown in FIG. 2 includes the following steps:
In step S41, the data of the first rendering mode sample image and the second rendering mode sample image is obtained.
In step S42, the size of the first rendering mode sample image is adjusted to the full size of the display screen of the display device.
In step S43, the second rendering mode sample image is superimposed onto the stretched first rendering mode sample image.
In step S44, the superimposed image is transmitted to the display apparatus.

The above-mentioned steps S41-S44 can be performed through an integrated logic operation circuit, for example, a processor of the display apparatus. Through the above-mentioned steps S41-S44, the image displayed on the display screen finally shows that the target region has a higher definition, and the display regions other than the target region have a lower definition. Because the human eyes can perceive only the details of a gaze area and the perception of area that is beyond 5° of the user's gaze area is gradually reduced. Therefore, a user would not be aware of the apparent definition loss of the display image.

Here, it should be noted that, the above-mentioned steps S41-44 can be performed by one or more processors, such processors can be integrated into one computer product (for example, such computer product connects to an external display apparatus), and also can be integrated into a driver controller of the display apparatus having a logical operation processing function.

The following describes a rendering method according to one embodiment of the present disclosure using the image resolution as an example.

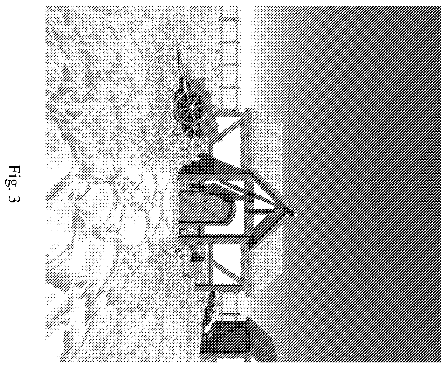

In step S1', the display resolution of a monocular image of a display screen is 4320X4800. The entire display region is rendered at a display resolution of 1080x1200 to generate a first image resolution sample image having a display resolution of 1080 x1200 as shown in FIG. 3. In one embodiment, during the rendering at a low image resolution, the entire display region is compressed 1/4 longitudinally and 1/4 horizontally. The first image resolution sample image corresponds to the first rendering mode sample image.

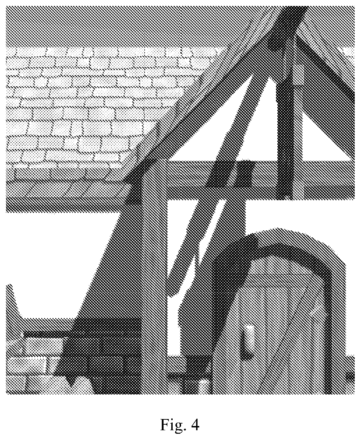

In step S2', a center region of the entire display region is determined as the target region, and the determined targeted region is rendered at a display resolution of 1080 x 1200 to generate a second image resolution rendering sample image having a 1080 x 1200 display resolution, as shown in FIG. 4. In one embodiment, in high image resolution rendering, the target region is 1/4 horizontally and 1/4 vertically of the entire display region. The second image resolution rendering sample image has a same pixel density per unit area as the monocular image of the display screen. The second image resolution rendering corresponds to the second rendering mode sample image.

In one embodiment, in the above-mentioned step S2', the method of calculating the location of the target region includes the following: setting α as the field of view (fov) of the camera for the entire display region; set β as the fov of the camera for the target region, set 1:n (here, n=16) as the ratio of the area of the target region to the area of the entire display region. The relationship between the fovs of the cameras for the targeted region and the entire display region is tan $\left(\frac{α}{2}\right) = \frac{tan \left(\frac{β}{2}\right)}{n}$. According to the equation, β can be calculated using the known α, and n. In one embodiment, when the fov α of the camera of the entire display region is 90° and the ratio between the area of the target region to the entire display region is 1:16, the fov β of the target region is 28.07°. Furthermore, the position of the target region in the entire display region can be obtained based on the acquired fov β of the target region.

In step S3': the first image resolution rendering sample image that is generated at the low image resolution rendering and the second image resolution rendering sample image that is generated at the high image resolution rendering are spliced together.

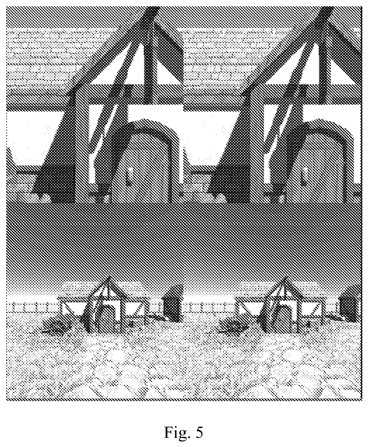

In one embodiment, taking the head mounted display as an example, in the spliced image as shown in FIG. 5, the upper left corner is the image of the target region of the corresponding left eye, that is, the second image resolution rendering sample image of the left eye. The lower left corner is the image of the entire display region of the corresponding left eye, that is, the first image resolution rendering sample image of the left eye. The upper right corner is the image of the target region of the corresponding right eye, that is, the second image resolution rendering sample image of the right eye. The lower right corner is the image of the entire display region of the corresponding right eye, that is, the first image resolution rendering sample image of the right eye. The spliced image is then transmitted. Because the display resolution of each of the four rendering images is 1080x1200, the display resolution of the spliced image is 2160 x 2400. In comparison, the amount of data being transmitted according to the embodiment of the present disclosure is only 1/8 of the data being transmitted in the method of rendering both the left eye and the right eye images at a high display resolution of 4320 x 4800. Therefore, the embodiment of the present disclosure provides an image rendering method that significantly reduces the rendering workload and the amount of data being transmitted.

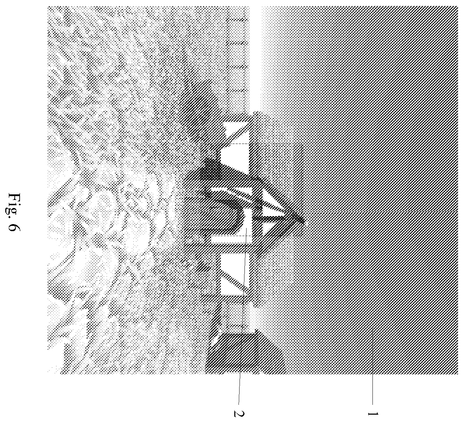

In some embodiments, splicing the images and driving the display screen of the display device to display includes the following steps:
In step S4', the monocular first image resolution rendering sample image is stretched to cover the size of the entire display screen of the display device. Then, the monocular second image resolution rendering sample image is superimposed on the stretched monocular first image resolution rendering sample image to form a monocular image. FIG. 6 shows the final monocular image. The center region of the final monocular image is the target region 2 that has been rendered at a high image resolution, and the region around the center region is the non-target region 1 that has been rendered at a low image resolution.

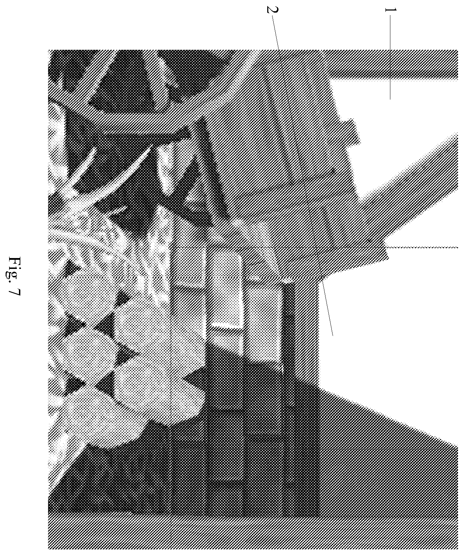

As shown in FIG. 7 which is a partially zoomed-in image of FIG. 6, it can be clearly seen that the definition of the target region 2 is higher than the definition of the non-targeted region.

In some embodiments, the present disclosure provides a computer program product. Such computer program product performs as a renderer, which is programed to perform computer operating instructions to run on a processor and cause the processor to perform the rendering method of an embodiment of the present disclosure.

In some embodiments, the renderer includes a first rendering module, a second rendering module, and a data transmission module. The first rendering module and the second rendering module are respectively connected to the data transmission module.

In one embodiment, the first rendering module is configured to render the entire displaying region by the first render mode to obtain a first rendering mode sample image. The image rendering steps of the first rendering module can refer to the related description in the foregoing rendering method, and the description thereof is not repeated here.

In one embodiment, the second rendering module is configured to render the target region of the entire display region by the second rendering mode to generate a second rendering mode sample image. The image rendering steps of the second rendering module can refer to the related description in the foregoing rendering method, and the description thereof is not repeated here.

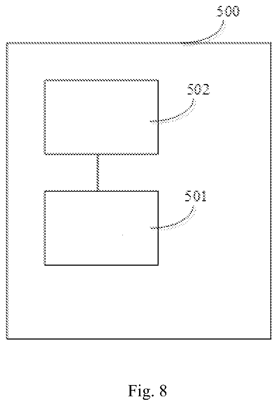

In one embodiment, the data transmission module is configured to transmit data of the first rendering mode sample image and the second rendering mode sample image. As shown in FIG. 8, as a possible implementation, the data transmission module includes: an image splicing unit and a spliced image transmission unit. The image splicing unit is configured to splice together the first rendering mode sample image and the second rendering mode sample image. The spliced image transmission unit is configured to transmit the spliced image to the display screen of the display apparatus.

The above-described renderer can reduce the rendering workload and the amount of data to be transmitted. Therefore, the renderer can better satisfy the high-quality display needs and a higher quality of real-time display is realized. In addition, the human eyes would not apparently perceive the reduced definition of the image that has been rendered.

It should be noted that the above-described renderer of an embodiments of the present application can be implemented with a computer software program. The described instruction can also be implemented by integrating into a hardware circuit.

One embodiment of the present disclosure further provides a computer readable storage medium. The foregoing programs may be stored in the computer readable storage medium. When the program is executed, one or more of the foregoing rendering steps are performed.

As shown in FIG. 8, one of the embodiments of the present disclosure provides a computer product 500, which includes one or more processors 502. The one or more processors are configured to execute computer instructions to perform one or more steps of the forgoing rendering method according to one embodiment of the present disclosure.

Optionally, the computer product 500 includes a storage 501 that connects to processor 502. The storage is configured to store commands of the computer instruction.

The storage 501 can be implemented by any type of volatile or non-volatile storage device or a combination therefor, such as static random-access memory (SRAM), electrically erasable programmable read-only memory (EEPROM), erasable programmable read-only memory (EPROM), read-only memory (ROM), magnetic memory, flash memory, disk, or optical disk.

In one embodiment, the processor 502 is a central processing unit (CPU) or a field-programmable logic array (FPGA) , a microcontroller (MCU), a digital signal processor (DSP), an application- specific integrated circuit (ASIC), or a graphics processing unit (GPU) having processing power and/or program execution capability. One or more processors may be configured to form a processor group to simultaneously execute the above-described rendering method. Alternatively, some of the processors perform partial steps of the above-described rendering method, and some of the processors perform other partial steps of the above-described rendering methods.

The computer readable program instructions may be loaded onto a computer, other programmable data processing apparatus, or other device to cause a series of operational steps to be performed on the computer, other programmable apparatus or other device to produce a computer implemented process.

The computer product 500 can be connected to various input devices (such as a user-interface, a keyboard, etc.), various output devices (such as speakers, network cards, etc.), and display apparatuses to achieve the interaction of computer products with other products or users exchanges, and the description thereof will not be repeated here.

Wherein, the connection may be through a network connection, such as a wireless network, a wired network, and/or any combination of a wireless network and a wired network. The network may include a local area network, the internet, a telecommunications network (Internet of Things), and/or any combination of the above-networks, etc. The wired network can communicate by means of twisted pair, coaxial cable or optical fiber transmission. A wireless communication network such as 3G/4G/5G mobile communication network, Bluetooth, Zigbee or Wi-Fi can be used.

Embodiments of the present disclosure also provide a display apparatus including a display screen. The display apparatus is connected to the computer product of the above embodiments and the data transmission apparatus. The computer acquires and renders the entire display image to be rendered and displayed, the data transmission apparatus receives the output from the computer and transmits the data to the display apparatus to display the image.

The computer product can be separated from the display apparatus or integrated into the display apparatus. The image to be rendered may be provided by the separated computer product or the integrated display apparatus.

In one embodiment, the data transmission apparatus is coupled to the display driving circuit of the display screen. For example, the interface of the data transmission apparatus connects to the connector of the display screen, such as video graphics array (VGA), digital visual interface (DVI), high-definition multimedia interface (HDMI), and display port (DP), etc.

In one embodiment, the data transmission apparatus is a display connection cable connecting to the display screen interface.

In one embodiment, the data transmission apparatus is a display signal transceiver based on wireless implementation, for example, the wireless display transceiver capable of performing display functions such as Air Play, digital living network alliance device (DLNA), Miracast, wireless display (WiDi), and Chromecast.

In one embodiment, the display apparatus connects or integrates with one or more sensors, and the sensor connects to the processor. The sensor is configured to track and determine the gaze point of the user, and the processor acquires the gaze point of the user.

In one embodiment, the processor of the computer product is configured to acquire a size of a display screen and to convert the first rendering mode sample image to cover the size of the display screen.

In some embodiments, the display apparatus is a head mounted display apparatus including, but not limited to, head mounted display apparatus for VR, AR, MR, and CR, etc.

## Claims

1. An image rendering method for a computer product coupled to a display apparatus, comprising:
rendering an entire display region of the display apparatus with a first rendering mode to generate a first rendering mode sample image (SI);
determining a target region in the entire display region;
rendering the target region with a second rendering mode to generate a second rendering mode sample image (S2); and
transmitting data of the first rendering mode sample image and the second rendering mode sample image (S3),
wherein rendering is a process of converting a 3D scene to a 2D image for display on a screen;
wherein the second rendering mode comprises at least a value of an image rendering feature that is higher than that of the first rendering mode;
wherein the image rendering feature comprises at least one of image resolution or bit depth,
wherein determining the target region in the entire display region comprises:
determining a center point of the entire display region as the center point of the target region;
determining the ratio of the area of the target region to the area of the entire display region as 1:n; obtaining a field of view α of a virtual camera for rendering the entire display region from the 3D scene;
calculating a field of view β of a virtual camera for rendering the target region from the 3D scene using an equation below: $tan \left(\frac{α}{2}\right) = \frac{tan \left(\frac{β}{2}\right)}{n} ;$
and calculating a location of the target region in the entire display region based on the calculated field of view β of the camera for the target region,
wherein the virtual camera is an orthogonal projection camera or a perspective projection camera that provides viewable scenes during the rendering.

2. An image rendering method for a computer product coupled to a display apparatus, comprising:
rendering an entire display region of the display apparatus with a first rendering mode to generate a first rendering mode sample image (SI);
determining a target region in the entire display region;
rendering the target region with a second rendering mode to generate a second rendering mode sample image (S2); and
transmitting data of the first rendering mode sample image and the second rendering mode sample image (S3),
wherein rendering is a process of converting a 3D scene to a 2D image for display on a screen;
wherein the second rendering mode comprises at least a value of an image rendering feature that is higher than that of the first rendering mode;
wherein the image rendering feature comprises at least one of image resolution or bit depth;
wherein determining the target region in the entire display region comprises:
determining a user's gaze point in the entire display region as the center point of the target region is;
determining the ratio of the area of the target region to the area of the entire display image as 1 :n; obtaining coordinates of the gaze point (Zx, Zy); near clipping distance Anear and far clipping distance Afar of a virtual camera for rendering the entire display region from the 3D scene; left field of view βleft , right field angle βright , top field of view βup, bottom field of view βdown of a virtual camera for rendering the target region from the 3D scene;
obtaining a range of Zx as -m<Zx<m and a range of Zy, -m<Zy<m based on the 1:n ratio of area of the target region to the area of the entire display region;
obtaining boundary values of the target region according to below equations:
Near clipping distance: Znear = Anear;
Far clipping distance: Zfar=Afar;
Left boundary of near clipping plane: Zleft =Znear x tanβleft x 1/n x ((2 x Zx- m)/m);
Right boundary of near clipping plane: Zright=Znear x tanβright x 1/n x ((2 x Zx +m)/m);
Up boundary of near clipping plane: Zup=Znear x tanβup x 1/n x ((2 x Zy +m)/m);
Down boundary of near clipping plane: Zdown=Znear x tanβdown x 1/n x ((2 x Zy- m)/m);
obtaining parameters of projection matrix of the target region based on the obtained boundary values of the target region according to below equations: $\left\{\begin{matrix}x = 2 \times {Z}_{near} / \left({Z}_{right}-{Z}_{left}\right) \\ y = 2 \times {Z}_{near} / \left({Z}_{up}-{Z}_{down}\right) \\ a = \left({Z}_{right}+{Z}_{left}\right) / \left({Z}_{right}-{Z}_{left}\right) \\ b = \left({Z}_{up}+{Z}_{down}\right) / \left({Z}_{up}-{Z}_{down}\right) \\ c = - \left({Z}_{far}+{Z}_{near}\right) / \left({Z}_{far}-{Z}_{near}\right) \\ d = - \left(2.0\times {Z}_{far}\times {Z}_{near}\right) / \left({Z}_{far}-{Z}_{near}\right) \\ e = - 1\end{matrix}\right.$
obtaining the projection matrix Zm of the target region based on the obtained parameters of the projection matrix of the target region: ${Z}_{m} = \left(\begin{matrix}x & 0 & a & 0 \\ 0 & y & b & 0 \\ 0 & 0 & c & d \\ 0 & 0 & e & 0\end{matrix}\right)$

3. The image rendering method according to claim 1 or 2, wherein rendering the entire display region with the first rendering mode comprises rendering the entire display region at a first image resolution; rendering the target region with the second rendering mode comprises rendering the target region at a second image resolution; and a number of pixels per unit area corresponding to the first image resolution is about 1/4 to 1/3 of a number of pixels per unit area corresponding to the second image resolution.

4. The image rendering method according to claim 1 or 2, wherein the ratio of the area of the target region to the area of the entire display region is about 1/4 to 1/3.

5. The image rendering method according to any one of claims 1 to 4, wherein transmitting the data of the first rendering mode sample image and the second rendering mode sample image comprises:
splicing together the first rendering mode sample image and the second rendering mode sample image to obtain a spliced image; and
transmitting the spliced image.

6. The image rendering method according to claim 5, wherein splicing the first rendering mode sample image and the second rendering mode sample image comprises:
superimposing the second rendering mode sample image on a corresponding area of the first rendering mode sample image.

7. The image rendering method according to claim 1 or 2, wherein the entire display region to be rendered corresponds to a monocular image of a display screen of the display apparatus.

8. The image rendering method according to claim 7, wherein
the image rendering feature of the first rendering mode sample image is smaller than a display index of a corresponding image of the display screen; and
the image rendering feature of the second rendering mode sample image equals to a display index of the corresponding image of the display screen,
the display index includes physical display parameters of the display screen such as display resolution, physical bit depth.

9. The image rendering method according to claim 7, wherein the image rendering feature comprises the image resolution;
a number of pixels per unit area corresponding to the first image resolution of the first rendering mode is smaller than a number of pixels per unit area corresponding to a display resolution of the monocular image of the display screen; and
a number of pixels per unit area corresponding to the second image resolution of the second rendering mode equals to the number of pixels per unit area corresponding to the display resolution of the monocular image of the display screen.

10. The image rendering method according to claim 1 or 2, wherein the display apparatus is a binocular head mounted display apparatus;
the first rendering mode sample image comprises a first image resolution rendering sample image of a left eye and a first image resolution rendering sample image of a right eye; and
the second rendering mode sample image comprises a second image resolution rendering sample image of a left eye and a second image resolution rendering sample image of a right eye.

11. A computer product, comprising one or more processors, the one or more processors are configured to implement the image rendering method according to any one of claims 1 to 10.

12. A system comprising a display apparatus and the computer product according to claim 11, wherein the display apparatus comprises a display screen configured to display an image based on data of the first rendering mode sample image and the second rendering mode sample image received from the computer product.

## Patentansprüche

1. Bildrenderverfahren für ein Computerprodukt, das mit einer Anzeigevorrichtung gekoppelt ist, umfassend:
Rendern einer gesamten Anzeigeregion der Anzeigevorrichtung mit einem ersten Rendermodus, um ein Musterbild des ersten Rendermodus zu generieren (S1);
Bestimmen einer Zielregion in der gesamten Anzeigeregion;
Rendern der Zielregion mit einem zweiten Rendermodus, um ein Musterbild des zweiten Rendermodus zu generieren (S2); und
Senden von Daten des Musterbildes des ersten Rendermodus und des Musterbildes des zweiten Rendermodus (S3),
wobei das Rendern ein Prozess des Konvertierens einer 3D-Szene in ein 2D-Bild zum Anzeigen auf einem Bildschirm ist;
wobei der zweite Rendermodus mindestens einen Wert eines Bildrendermerkmals umfasst, der höher ist als der des ersten Rendermodus;
wobei das Bildrendermerkmal mindestens eines von Bildauflösung oder Bittiefe umfasst,
wobei das Bestimmen der Zielregion in der gesamten Anzeigeregion umfasst:
Bestimmen eines Mittelpunktes der gesamten Anzeigeregion als den Mittelpunkt der Zielregion;
Bestimmen des Verhältnisses der Fläche der Zielregion zu der Fläche der gesamten Anzeigeregion als 1:n;
Erhalten eines Sichtfeldes α einer virtuellen Kamera zum Rendern der gesamten Anzeigeregion aus der 3D-Szene;
Berechnen eines Sichtfeldes β einer virtuellen Kamera zum Rendern der Zielregion aus der 3D-Szene unter Verwendung der folgenden Gleichung: $tan \left(\frac{α}{2}\right) = \frac{tan \left(\frac{β}{2}\right)}{n} ;$
und Berechnen einer Stelle der Zielregion in der gesamten Anzeigeregion auf der Grundlage des berechneten Sichtfeldes β der Kamera für die Zielregion,
wobei die virtuelle Kamera eine Orthogonalprojektionskamera oder eine Perspektivprojektionskamera ist, die sichtbare Szenen während des Renderns bereitstellt.

2. Bildrenderverfahren für ein Computerprodukt, das mit einer Anzeigevorrichtung gekoppelt ist, umfassend:
Rendern einer gesamten Anzeigeregion der Anzeigevorrichtung mit einem ersten Rendermodus, um ein Musterbild des ersten Rendermodus zu generieren (S1);
Bestimmen einer Zielregion in der gesamten Anzeigeregion;
Rendern der Zielregion mit einem zweiten Rendermodus, um ein Musterbild des zweiten Rendermodus zu generieren (S2); und
Senden von Daten des Musterbildes des ersten Rendermodus und des Musterbildes des zweiten Rendermodus (S3),
wobei das Rendern ein Prozess des Konvertierens einer 3D-Szene in ein 2D-Bild zum Anzeigen auf einem Bildschirm ist;
wobei der zweite Rendermodus mindestens einen Wert eines Bildrendermerkmals umfasst, der höher ist als der des ersten Rendermodus;
wobei das Bildrendermerkmal mindestens eines von Bildauflösung oder Bittiefe umfasst;
wobei das Bestimmen der Zielregion in der gesamten Anzeigeregion umfasst:
Bestimmen eines Blickpunktes eines Benutzers in der gesamten Anzeigeregion als den Mittelpunkt der Zielregion;
Bestimmen des Verhältnisses der Fläche der Zielregion zu der Fläche des gesamten Anzeigebildes als 1:n;
Erhalten von Koordinaten des Blickpunktes (Zx, Zy); der nahen Clipping-Distanz Anear und der fernen Clipping-Distanz Afar einer virtuellen Kamera zum Rendern der gesamten Anzeigeregion aus der 3D-Szene; des linken Sichtfeldes βleft, des rechten Sichtfeldwinkels βright, des oberen Sichtfeldes βup, des unteren Sichtfeldes βdown einer virtuellen Kamera zum Rendern der Zielregion aus der 3D-Szene;
Erhalten eines Bereichs von Zx als -m < Zx < m und eines Bereichs von Zy, -m < Zy < m auf der Grundlage des 1:n-Verhältnisses der Fläche der Zielregion zur Fläche der gesamten Anzeigeregion;
Erhalten von Grenzwerten der Zielregion gemäß den folgenden Gleichungen:
Nahe Clipping-Distanz: Znear = Anear;
Ferne Clipping-Distanz: Zfar = Afar;
Linke Grenze der nahen Clipping-Ebene: Zleft = Znear × tanβleft × 1/n × ((2 × Zx-m)/m);
Rechte Grenze der nahen Clipping-Ebene: Zright = Znear × tanβright × 1/n × ((2 × Zx +m)/m);
Aufwärts-Grenze der nahen Clipping-Ebene: Zup = Znear × tanβup × 1/n × ((2 × Zy +m)/m);
Abwärts-Grenze der nahen Clipping-Ebene: Zdown = Znear × tanβdown × 1/n × ((2 × Zy- m)/m);
Erhalten von Parameter der Projektionsmatrix der Zielregion auf der Grundlage der erhaltenen Grenzwerte der Zielregion gemäß den folgenden Gleichungen: $\left\{\begin{matrix}x = 2 \times {Z}_{near} / \left({Z}_{right}-{Z}_{left}\right) \\ y = 2 \times {Z}_{near} / \left({Z}_{up}-{Z}_{down}\right) \\ a = \left({Z}_{right}+{Z}_{left}\right) / \left({Z}_{right}-{Z}_{left}\right) \\ b = \left({Z}_{up}+{Z}_{down}\right) / \left({Z}_{up}-{Z}_{down}\right) \\ c = - \left({Z}_{far}+{Z}_{near}\right) / \left({Z}_{far}-{Z}_{near}\right) \\ d = - \left(2.0\times {Z}_{far}\times {Z}_{near}\right) / \left({Z}_{far}-{Z}_{near}\right) \\ e = - 1\end{matrix}\right.$
Erhalten der Projektionsmatrix Zm der Zielregion auf der Grundlage der erhaltenen Parameter der Projektionsmatrix der Zielregion: ${Z}_{m} = \left(\begin{matrix}x & 0 & a & 0 \\ 0 & y & b & 0 \\ 0 & 0 & c & d \\ 0 & 0 & e & 0\end{matrix}\right) .$

3. Bildrenderverfahren nach Anspruch 1 oder 2, wobei das Rendern der gesamten Anzeigeregion mit dem ersten Rendermodus das Rendern der gesamten Anzeigeregion mit einer ersten Bildauflösung umfasst; das Rendern der Zielregion mit dem zweiten Rendermodus das Rendern der Zielregion mit einer zweiten Bildauflösung umfasst; und die Anzahl von Pixeln pro Flächeneinheit, die der ersten Bildauflösung entspricht, etwa 1/4 bis 1/3 einer Anzahl von Pixeln pro Flächeneinheit beträgt, die der zweiten Bildauflösung entspricht.

4. Bildrenderverfahren nach Anspruch 1 oder 2, wobei das Verhältnis der Fläche der Zielregion zur Fläche der gesamten Anzeigeregion etwa 1/4 bis 1/3 beträgt.

5. Bildrenderverfahren nach einem der Ansprüche 1 bis 4, wobei das Senden der Daten des Musterbildes des ersten Rendermodus und des Musterbildes des zweiten Rendermodus umfasst:
Zusammenfügen des Musterbildes des ersten Rendermodus und des Musterbildes des zweiten Rendermodus, um ein zusammengefügtes Bild zu erhalten; und
Senden des zusammengefügten Bildes.

6. Bildrenderverfahren nach Anspruch 5, wobei das Zusammenfügen des Musterbildes des ersten Rendermodus und des Musterbildes des zweiten Rendermodus umfasst:
Legen des Musterbildes des zweiten Rendermodus über eine entsprechende Fläche des Musterbildes des ersten Rendermodus.

7. Bildrenderverfahren nach Anspruch 1 oder 2, wobei die gesamte zu rendernde Anzeigeregion einem monokularen Bild eines Anzeigebildschirms der Anzeigevorrichtung entspricht.

8. Bildrenderverfahren nach Anspruch 7, wobei
das Bildrendermerkmal des Musterbildes des ersten Rendermodus kleiner als ein Anzeigeindex eines entsprechenden Bildes des Anzeigebildschirms ist; und
das Bildrendermerkmal des Musterbildes des zweiten Rendermodus gleich einem Anzeigeindex des entsprechenden Bildes des Anzeigebildschirms ist,
der Anzeigeindex physische Anzeigeparameter des Anzeigebildschirms wie zum Beispiel die Anzeigeauflösung, physische Bittiefe umfasst.

9. Bildrenderverfahren nach Anspruch 7, wobei das Bildrendermerkmal die Bildauflösung umfasst;
eine Anzahl von Pixeln pro Flächeneinheit, die der ersten Bildauflösung des ersten Rendermodus entspricht, kleiner ist als eine Anzahl von Pixeln pro Flächeneinheit, die einer Bildauflösung des monokularen Bildes des Anzeigebildschirms entspricht; und
eine Anzahl von Pixeln pro Flächeneinheit, die der zweiten Bildauflösung des zweiten Rendermodus entspricht, gleich der Anzahl von Pixeln pro Flächeneinheit ist, die der Anzeigeauflösung des monokularen Bildes des Anzeigebildschirms entspricht.

10. Bildrenderverfahren nach Anspruch 1 oder 2, wobei die Anzeigevorrichtung eine binokulare, am Kopf befestigte Anzeigevorrichtung ist;
das Musterbild des ersten Rendermodus ein Rendermusterbild mit einer ersten Bildauflösung eines linken Auges und ein Rendermusterbild mit einer ersten Bildauflösung des rechten Auges umfasst; und
das Musterbild des zweiten Rendermodus ein Rendermusterbild mit einer zweiten Bildauflösung eines linken Auges und ein Rendermusterbild mit einer zweiten Bildauflösung des rechten Auges umfasst.

11. Computerprodukt, umfassend einen oder mehrere Prozessoren, wobei der eine oder die mehreren Prozessoren dazu eingerichtet sind, das Bildrenderverfahren nach einem der Ansprüche 1 bis 10 zu implementieren.

12. System, umfassend eine Anzeigevorrichtung und das Computerprodukt nach Anspruch 11, wobei die Anzeigevorrichtung einen Anzeigebildschirm umfasst, der dazu eingerichtet ist, ein Bild auf der Grundlage von Daten des Musterbildes des ersten Rendermodus und des Musterbildes des zweiten Rendermodus, die von dem Computerprodukt empfangen wurden, anzuzeigen.

## Revendications

1. Procédé de rendu d'image pour un produit informatique couplé à un appareil d'affichage, comprenant de :
effectuer un rendu de toute une région d'affichage de l'appareil d'affichage avec un premier mode de rendu pour générer une image échantillon du premier mode de rendu (S1) ;
déterminer une région cible dans toute la région d'affichage ;
effectuer un rendu de la région cible avec un second mode de rendu pour générer une image échantillon du second mode de rendu (S2) ; et
transmettre des données de l'image échantillon du premier mode de rendu et de l'image échantillon du second mode de rendu (S3),
dans lequel un rendu est un processus consistant à convertir une scène 3D en une image 2D pour un affichage sur un écran ;
dans lequel le second mode de rendu comprend au moins une valeur d'une caractéristique de rendu d'image qui est supérieure à celle du premier mode de rendu ;
dans lequel la caractéristique de rendu d'image comprend au moins une parmi une résolution d'image ou une profondeur en bits,
dans lequel la détermination de la région cible dans toute la région d'affichage comprend de :
déterminer un point central de toute la région d'affichage comme le point central de la région cible ;
déterminer le rapport de la surface de la région cible sur la surface de toute la région d'affichage comme 1:n ;
obtenir un champ de vision α d'une caméra virtuelle pour effectuer le rendu de toute la région d'affichage à partir de la scène 3D ;
calculer un champ de vision β d'une caméra virtuelle pour effectuer le rendu de la région cible à partir de la scène 3D en utilisant une équation ci-dessous : $tan \left(\frac{α}{2}\right) = \frac{tan \left(\frac{β}{2}\right)}{n}$
et calculer un emplacement de la région cible dans toute la région d'affichage sur la base du champ de vision β calculé de la caméra pour la région cible,
dans lequel la caméra virtuelle est une caméra de projection orthogonale ou une caméra de projection en perspective qui fournit des scènes visualisables pendant le rendu.

2. Procédé de rendu d'image pour un produit informatique couplé à un appareil d'affichage, comprenant de :
effectuer un rendu de toute une région d'affichage de l'appareil d'affichage avec un premier mode de rendu pour générer une image échantillon du premier mode de rendu (S1) ;
déterminer une région cible dans toute la région d'affichage ;
effectuer un rendu de la région cible avec un second mode de rendu pour générer une image échantillon du second mode de rendu (S2) ; et
transmettre des données de l'image échantillon du premier mode de rendu et de l'image échantillon du second mode de rendu (S3),
dans lequel un rendu est un processus consistant à convertir une scène 3D en une image 2D pour un affichage sur un écran ;
dans lequel le second mode de rendu comprend au moins une valeur d'une caractéristique de rendu d'image qui est supérieure à celle du premier mode de rendu ;
dans lequel la caractéristique de rendu d'image comprend au moins une parmi une résolution d'image ou une profondeur en bits ;
dans lequel la détermination de la région cible dans toute la région d'affichage comprend de :
déterminer un point de regard d'un utilisateur dans toute la région d'affichage comme le point central de la région cible ;
déterminer le rapport de la surface de la région cible sur la surface de toute l'image d'affichage comme 1:n ;
obtenir des coordonnées du point de regard (Zx, Zy) ; de la distance de détourage proche Anear et de la distance de détourage lointain Afar d'une caméra virtuelle pour effectuer le rendu de toute la région d'affichage à partir de la scène 3D ; du champ de vision gauche βleft, de l'angle de champ droit βright, du champ de vision supérieur βup, du champ de vision inférieur βdown d'une caméra virtuelle pour effectuer le rendu de la région cible à partir de la scène 3D ;
obtenir un intervalle de Zx sous la forme -m < Zx < m et un intervalle de Zy, -m < Zy < m sur la base du rapport 1:n de la surface de la région cible sur la surface de toute la région d'affichage ;
obtenir des valeurs de frontière de la région cible d'après des équations ci-dessous :
Distance de détourage proche : Znear = Anear ;
Distance de détourage lointain : Zfar = Afar ;
Frontière gauche du plan de détourage proche : Zleft = Znear × tanβleft × 1/n × ((2 × Zx- m)/m) ;
Frontière droite du plan de détourage proche : Zright = Znear × tanβright × 1/n × ((2 × Zx +m)/m) ;
Frontière supérieure du plan de détourage proche : Zup = Znear × tanβup × 1/n × ((2 × Zy +m)/m) ;
Frontière inférieure du plan de détourage proche : Zdown = Znear × tanβdown × 1/n × ((2 × Zy- m)/m) ;
obtenir des paramètres d'une matrice de projection de la région cible sur la base des valeurs de frontière obtenues de la région cible d'après des équations ci-dessous : $\left\{\begin{matrix}x = 2 \times {Z}_{near} / \left({Z}_{right}-{Z}_{left}\right) \\ y = 2 \times {Z}_{near} / \left({Z}_{up}-{Z}_{down}\right) \\ a = \left({Z}_{right}+{Z}_{left}\right) / \left({Z}_{right}-{Z}_{left}\right) \\ b = \left({Z}_{up}+{Z}_{down}\right) / \left({Z}_{up}-{Z}_{down}\right) \\ c = - \left({Z}_{far}+{Z}_{near}\right) / \left({Z}_{far}-{Z}_{near}\right) \\ d = - \left(2.0\times {Z}_{far}\times {Z}_{near}\right) / \left({Z}_{far}-{Z}_{near}\right) \\ e = - 1\end{matrix}\right.$
obtenir la matrice de projection Zm de la région cible sur la base des paramètres obtenus de la matrice de projection de la région cible : ${Z}_{m} = \left(\begin{matrix}x & 0 & a & 0 \\ 0 & y & b & 0 \\ 0 & 0 & c & d \\ 0 & 0 & e & 0\end{matrix}\right) .$

3. Procédé de rendu d'image selon la revendication 1 ou 2, dans lequel le rendu de toute la région d'affichage avec le premier mode de rendu comprend d'effectuer le rendu de toute la région d'affichage à une première résolution d'image ; le rendu de la région cible avec le second mode de rendu comprend d'effectuer le rendu de la région cible à une seconde résolution d'image ; et un nombre de pixels par surface unitaire correspondant à la première résolution d'image est égal à environ 1/4 à 1/3 d'un nombre de pixels par surface unitaire correspondant à la seconde résolution d'image.

4. Procédé de rendu d'image selon la revendication 1 ou 2, dans lequel le rapport de la surface de la région cible sur la surface de toute la région d'affichage est d'environ 1/4 à 1/3.

5. Procédé de rendu d'image selon l'une quelconque des revendications 1 à 4, dans lequel la transmission des données de l'image échantillon du premier mode de rendu et de l'image échantillon du second mode de rendu comprend de :
assembler ensemble l'image échantillon du premier mode de rendu et l'image échantillon du second mode de rendu pour obtenir une image assemblée ; et
transmettre l'image assemblée.

6. Procédé de rendu d'image selon la revendication 5, dans lequel l'assemblage de l'image échantillon du premier mode de rendu et de l'image échantillon du second mode de rendu comprend de :
superposer l'image échantillon du second mode de rendu sur une zone correspondante de l'image échantillon du premier mode de rendu.

7. Procédé de rendu d'image selon la revendication 1 ou 2, dans lequel toute la région d'affichage pour laquelle un rendu doit être effectué correspond à une image monoculaire d'un écran d'affichage de l'appareil d'affichage.

8. Procédé de rendu d'image selon la revendication 7, dans lequel
la caractéristique de rendu d'image de l'image échantillon du premier mode de rendu est inférieure à un indice d'affichage d'une image correspondante de l'écran d'affichage ; et
la caractéristique de rendu d'image de l'image échantillon du second mode de rendu est égale à un indice d'affichage de l'image correspondante de l'écran d'affichage, l'indice d'affichage d'image inclut des paramètres d'affichage physiques de l'écran d'affichage tels que la résolution d'affichage, la profondeur physique en bits.

9. Procédé de rendu d'image selon la revendication 7, dans lequel la caractéristique de rendu d'image comprend la résolution d'image ;
un nombre de pixels par surface unitaire correspondant à la première résolution d'image du premier mode de rendu est inférieur à un nombre de pixels par surface unitaire correspondant à une résolution d'affichage de l'image monoculaire de l'écran d'affichage ; et
un nombre de pixels par surface unitaire correspondant à la seconde résolution d'image du second mode de rendu est égal au nombre de pixels par surface unitaire correspondant à la résolution d'affichage de l'image monoculaire de l'écran d'affichage.

10. Procédé de rendu d'image selon la revendication 1 ou 2, dans lequel l'appareil d'affichage est un appareil d'affichage binoculaire monté sur la tête ;
l'image échantillon du premier mode de rendu comprend une image échantillon de rendu avec la première résolution d'image d'un œil gauche et une image échantillon de rendu avec la première résolution d'image d'un œil droit ; et
l'image échantillon du second mode de rendu comprend une image échantillon de rendu avec la seconde résolution d'image d'un œil gauche et une image échantillon de rendu avec la seconde résolution d'image d'un œil droit.

11. Produit informatique, comprenant un ou plusieurs processeurs, les un ou plusieurs processeurs étant configurés pour mettre en œuvre le procédé de rendu d'image selon l'une quelconque des revendications 1 à 10.

12. Système comprenant un appareil d'affichage et le produit informatique selon la revendication 11, dans lequel l'appareil d'affichage comprend un écran d'affichage configuré pour afficher une image sur la base de données de l'image échantillon du premier mode de rendu et de l'image échantillon de second mode de rendu reçues du produit informatique.
